# EUROPÄISCHE PATENTSCHRIFT

(11) **EP 3 535 750 B1**
(45) Veröffentlichungstag und Bekanntmachung des Hinweises auf die Patenterteilung: **10.01.2024**
(21) Anmeldenummer: 17772333.5
(22) Anmeldetag: 12.09.2017
(51) Int. Cl.: G10K 11/00, G10K 9/122

(54) **ULTRASCHALLWANDLER**
ULTRASONIC TRANSDUCER
TRANSDUCTEUR À ULTRASONS

(30) Priorität: 03.11.2016 DE 102016221535
(43) Veröffentlichungstag der Anmeldung: 11.09.2019
(73) Patentinhaber: Robert Bosch GmbH, 70442 Stuttgart (DE)
(72) Erfinder: WEIDENFELDER, David, 71229 Leonberg (DE); BAYARSAIKHAN, Bayar, 71229 Leonberg (DE)
(86) Internationale Anmeldenummer: PCT/EP2017/072832
(87) Internationale Veröffentlichungsnummer: WO 2018/082835

(56) Entgegenhaltungen:
- EP-A1- 3 012 655
- DE-A1- 19 924 505
- DE-A1-102009 046 148
- DE-A1-102009 046 972
- DE-A1-102011 077 553
- DE-A1-102012 014 932

## Beschreibung

### Stand der Technik

Die Erfindung betrifft einen Ultraschallwandler nach dem Oberbegriff des Anspruchs 1.

Ein derartiger Ultraschallwandler ist aus der DE 10 2012 200 639 A1 der Anmelderin bekannt. Der bekannte Ultraschallwandler besteht aus mehreren miteinander verbundenen Baugruppen bzw. Bauteilen, insbesondere einem Membrantopf, der unter Zwischenlage eines aus elastischem Material bestehenden Entkopplungsrings mittels eines Befestigungselements mit einem Gehäuse verbunden ist. Der Membrantopf dient der Aufnahme bzw. Befestigung eines Piezoelements zum Anregen des Membrantopfs zu Schwingungen im Ultraschallbereich, während das üblicherweise als Spritzgußteil ausgebildete Gehäuse beispielsweise der Aufnahme einer Aufnahmeelektronik sowie der Befestigung des Ultraschallwandlers an einem Stoßfänger eines Kraftfahrzeuges dient, wobei das Gehäuse gleichzeitig einen Anschlußstecker ausbildet, über den der Ultraschallwandler mit einem Gegenstecker eines Kabelbaums des Kraftfahrzeugs verbindbar ist. Der aus elastischem Material bestehende Entkopplungsring dient dazu, dass sich möglichst keine Schwingungen von dem Membrantopf auf das Gehäuse übertragen. Bei dem aus der genannten Schrift bekannten Ultraschallwandler ist das ringförmige Befestigungselement mittels einer Gewindeverbindung am Außenumfang des Gehäuses befestigt. Anstelle einer Gewindeverbindung zwischen dem Gehäuse und dem Befestigungselement sind darüber hinaus auch Rastverbindungen bekannt, die den Membrantopf über das Befestigungselement an dem Gehäuse sichern bzw. positionieren. Das an der Außenwand des Gehäuses angeordnete Befestigungselement hat den Vorteil, dass eine besonders einfache Befestigung ermöglicht wird, da die Zugänglichkeit zum Befestigungselement sehr gut ist.

Die Schrift DE 10 2012 014 932 A1 offenbart einen Ultraschallsensor mit einem Sensorgehäuse, welches aus zwei Gehäuseschalen besteht. In dem Sensorgehäuse ist eine Membran gehalten, welche in dem Sensorgehäuse mithilfe eines eingespritzten Entkopplungselements befestigt ist. Die beiden Gehäuseschalen sind über Rastmittel miteinander verbunden.

Die Schrift DE 10 2011 077 553 A1 offenbart einen Ultraschallwandler mit Piezoelement und Abstandssensor.

Ausgehend von dem Stand der Technik ergibt sich die objektive technische Aufgabe, den Membrantopf kostengünstiger und zuverlässiger mit dem Gehäuse zu verbinden.

### Offenbarung der Erfindung

Die obige Aufgabe wird erfindungsgemäß entsprechend der Merkmale des Anspruchs 1 gelöst.

Der Ultraschallwandler mit den Merkmalen des Anspruchs 1 hat den Vorteil, dass das Befestigungselement von äußeren (mechanischen) Einflüssen besonders gut geschützt angeordnet ist. Dadurch ist es nicht erforderlich, das Befestigungselement mit Blick auf eine möglichst große mechanische Robustheit besonders auszugestalten. Darüber hinaus ist durch die erfindungsgemäße, innerhalb des Gehäuses vorgesehene Anordnung des Befestigungselements ein (unbeabsichtigtes) Lösen des Befestigungselements und somit ein Lösen des Membrantopfs vom Gehäuse, je nach Ausbildung der Verbindung zwischen dem Befestigungselement und dem Gehäuse, zumindest erschwert. Durch die durch das Gehäuse geschützte Anordnung des Befestigungselements lässt sich das Befestigungselement aufgrund der geringen Anforderungen darüber hinaus besonders kostengünstig herstellen. Konkret wird erfindungsgemäß vorgeschlagen, dass das Befestigungselement zum form- und/oder kraftschlüssigen Verbinden mit dem Gehäuse zumindest bereichsweise radial innerhalb eines Aufnahmebereichs für das Befestigungselement am Gehäuse angeordnet ist. Eine derartige Ausgestaltung des Ultraschallwandlers ermöglicht es, das Befestigungselement beispielsweise über eine Gewindeverbindung wie beim eingangs genannten Stand der Technik, oder aber beispielsweise über eine Rastverbindung mit dem Gehäuse zu verbinden.

Vorteilhafte Weiterbildungen des erfindungsgemäßen Ultraschallwandlers sind in den Unteransprüchen aufgeführt.

Aus Gründen einer besonders einfachen Montage, bei der zum Sicherstellen der Verbindung zwischen dem Befestigungselement und dem Gehäuse im Gegensatz zu einer Gewindeverbindung kein Mindestanzugsmoment oder Ähnliches für das Befestigungselement eingestellt und überwacht werden muss, ist es vorgesehen, dass die Befestigung des Befestigungselements am Gehäuse über eine Rastverbindung erfolgt, die wenigstens ein am Befestigungselement radial nach außen ragendes Rastelement aufweist, das mit einer zumindest näherungsweise gegengleichen Rastöffnung zusammenwirkt, die im Bereich des Aufnahmebereichs am Gehäuse zumindest im Bereich einer Innenwand des Aufnahmebereichs ausgebildet ist. Unter einer zumindest näherungsweise gegengleichen Rastöffnung wird dabei verstanden, dass das Rastelement insbesondere in einer senkrecht zu einer Montagerichtung verlaufenden Richtung mit Spiel in der Rastöffnung angeordnet sein kann.

In Weiterbildung des zuletzt genannten Vorschlags ist es vorgesehen, dass die Rastöffnung als Durchgangsöffnung ausgebildet ist. Eine Durchgangsöffnung hat den Vorteil, dass eine Zugänglichkeit des Rastelements von der Außenseite des Gehäuses her möglich ist, sodass einerseits eine optische Kontrolle hinsichtlich der Ausbildung der Rastverbindung ermöglicht wird, und andererseits eine besonders einfache Demontage. Insbesondere, wenn das Rastelement die Durchgangsöffnung an der Außenseite des Gehäuses nicht überragt, ist darüber hinaus ein mechanischer Schutz des Rastelements durch die Außenwand des Gehäuses sichergestellt.

Zum Wiederlösen der Rastverbindung bzw. zur Beschränkung der erforderlichen Montagekräfte beim Ausbilden der Rastverbindung ist es vorgesehen, dass das wenigstens eine Rastelement als elastisch deformierbares bzw. bewegliches Rastelement ausgebildet ist.

In einer weiteren konstruktiv bevorzugten Ausgestaltung, die eine besonders geschützte des Befestigungselements und einen stufenfreien Übergang zum Gehäuse ermöglicht, ist es vorgesehen, dass das Befestigungselement auf der dem Gehäuse in Längsrichtung abgewandten Seite eine Außenkontur aufweist, die der Außenkontur des Gehäuses angepasst und mit dieser bündig abschließt, und dass eine dem Gehäuse abgewandte Stirnfläche des Befestigungselements bündig mit einer Stirnfläche des Aufnahmebereichs abschließt

Um bei Verwendung eines Entkopplungsrings eine Abdichtung des Aufnahmebereichs durch den Entkopplungsring zu erzielen, ist es vorgesehen, dass das Befestigungselement einen radial nach innen ragenden Quetschabschnitt aufweist, der mit dem zwischen dem Gehäuse und dem Membrantopf angeordneten, elastisch ausgebildeten Entkopplungsring zusammenwirkt.

Eine mechanisch besonders robuste und in Längsrichtung des Membrantopfs betrachtet einen relativ geringen Bauraum erfordernde Rastverbindung lässt sich erzielen, wenn das wenigstens eine Rastelement und die mit dem wenigstens einem Rastelement zusammenwirkende Rastöffnung jeweils in etwa rechteckförmig ausgebildet sind, wobei die Haupterstreckungsrichtung des Rastelements und der Rastöffnung senkrecht zur Längsachse des Membrantopfs verläuft.

Um das Befestigungselement in einer definierten Drehwinkellage zum Gehäuse anzuordnen, ist es insbesondere bei einer Ausbildung, bei der das Rastelement mit Spiel in Bezug auf die Drehwinkellage zur Rastöffnung angeordnet ist, vorgesehen, dass an dem Befestigungselement und dem Gehäuse jeweils wenigstens ein Zentriermittel ausgebildet ist, wobei die Zentriermittel zusammenwirken und das Befestigungselement zum Gehäuse in einer definierten Winkellage zueinander positionieren.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: einen vereinfachten Längsschnitt durch einen Ultraschallwandler,
- Fig. 2: eine perspektivische Ansicht eines Gehäuses und eines Befestigungselements, wie er bei dem Ultraschallwandler gemäß der Fig. 1 verwendet wird und
- Fig. 3 und Fig. 4: jeweils in vereinfachten Längsschnitten, Darstellungen zur Erläuterungen unterschiedlicher Montagemöglichkeiten des Ultraschallwandlers gemäß Fig. 1.

Gleiche Elemente bzw. Elemente mit gleicher Funktion sind in den Figuren mit den gleichen Bezugsziffern versehen.

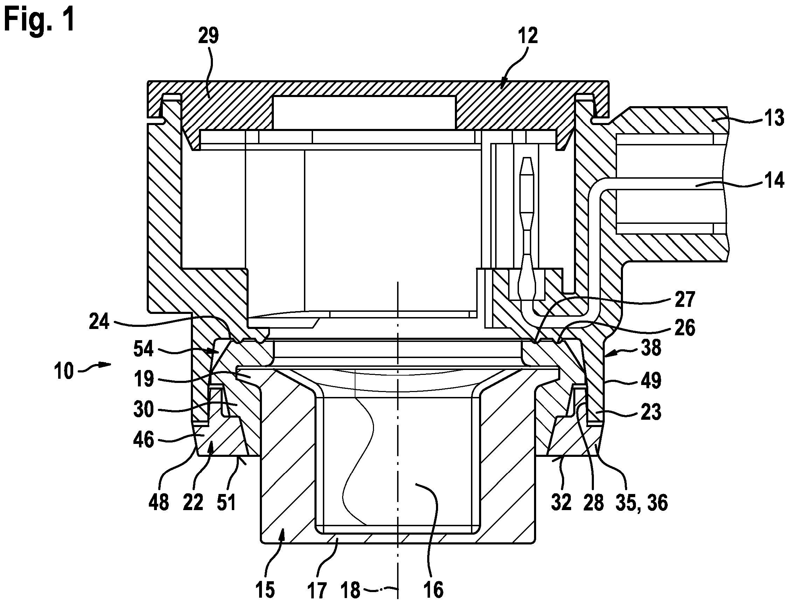

In der Fig. 1 ist ein Ultraschallwandler 10 stark vereinfacht dargestellt, wie er als Bestandteil eines Fahrerassistenzsystems in einem Kraftfahrzeug dient. Insbesondere ist der Ultraschallwandler 10 im Bereich eines Stoßfängers des Kraftfahrzeugs angeordnet bzw. befestigt und dient der Abstandsmessung zu Objekten, beispielsweise während Einparkmanövern. Von dem Ultraschallwandler 10 werden dabei, wie an sich bekannt, Schallwellen im Ultraschallbereich erzeugt und von dem Objekt reflektiert, wobei aus der Signallaufzeit der Schallwellen auf den Abstand zwischen dem Ultraschallwandler 10 und dem erfassten Objekt geschlossen wird. Ergänzend wird erwähnt, dass üblicherweise im Bereich eines Stoßfängers mehrere derartige Ultraschallwandler 10, beispielsweise vier Ultraschallwandler 10 oder sechs Ultraschallwandler 10 beabstandet zueinander angeordnet sind.

Der in den Figuren dargestellte Ultraschallwandler 10 weist ein aus Kunststoff bestehendes Gehäuse 12 auf, das im Bereich eines Anschlußsteckers 13 mehrere elektrische Steckeranschlussfahnen 14 umschließt. Die Steckeranschlussfahnen 14 bzw. der Anschlußstecker 13 sind mit einem (nicht dargestellten) Gegenstecker eines Kabelbaums des Kraftfahrzeugs verbindbar. Darüber hinaus dient das Gehäuse 12 der Befestigung des Ultraschallwandlers 10 im Bereich des angesprochenen Stoßfängers, wozu ggf. ein zusätzliches, in den Figuren nicht dargestelltes Befestigungselement oder Ähnliches vorgesehen sein kann. Insbesondere ist es vorgesehen, den Ultraschallwandler 10 bzw. das Gehäuse 12 in einer definierten Position in dem Stoßfänger anzuordnen, um eine gewünschte Abstrahlcharakteristik der Schallwellen zu erzielen.

Das Gehäuse 12 ist mit einem aus Metall bestehenden, im Tiefziehverfahren bzw. Fließpressen ausgebildeten Membrantopf 15 verbunden. Der Membrantopf 15 weist eine sacklochförmige Ausnehmung 16 auf, wobei in einem Bodenbereich 17 der Ausnehmung 16 ein nicht dargestelltes Schallwandlerelement, insbesondere in Form eines Piezoelements, angeordnet ist, das in Wirkverbindung mit dem Membrantopf 15 bzw. dem Bodenbereich 17 ist. Mittels des Piezoelements, das insbesondere mit einer im dem Gehäuse 12 angeordneten, ebenfalls nicht dargestellten elektronischen Schaltung verbunden ist, wird der Membrantopf 15 bzw. der Bodenbereich 17 in gewünschter Art und Weise zu Schwingungen angeregt. Der Membrantopf 15 weist darüber hinaus senkrecht zu einer Längsachse 18 des Membrantopfs 15 auf der dem Gehäuse 12 zugewandten Seite einen radial umlaufenden, nach außen ragenden Halteflansch 19 auf.

Der Membrantopf 15 ist auf der dem Halteflansch 19 zugewandten Seite in einem Aufnahmebereich 22 des Gehäuses 12 aufgenommen. Der Aufnahmebereich 22, der von einer radial umlaufenden Gehäusewand 23 begrenzt ist, weist darüber hinaus im Bereich einer senkrecht zur Längsachse 18 angeordneten, radial umlaufenden axialen Anschlagfläche 24 mehrere Erhebungen 26, 27 auf, die insbesondere ebenfalls radial umlaufend um die Längsachse 18 in unterschiedlichem Abstand zur Längsachse 18 angeordnet sein können. Die Innenwand 28 der Gehäusewand 23 ist im dargestellten Ausführungsbeispiel in Bezug zur Längsachse 18 leicht konisch ausgebildet, derart, dass der Innendurchmesser des Aufnahmebereichs 22 in Richtung zu einem Gehäusedeckel 29 des Gehäuses 12 hin abnimmt.

Der Aufnahmebereich 22 umfasst den Membrantopf 15 unter Zwischenlage eines aus elastischem Material bestehenden Entkopplungsrings 30 radial. Der insbesondere aus einem Elastomer bestehende Entkopplungsring 30 ist axial zwischen dem Halteflansch 19 des Membrantopfs 15 und der Anschlagfläche 24 des Aufnahmebereichs 22 angeordnet. Weiterhin schließt der Entkopplungsring 30 im dargestellten Ausführungsbeispiel bündig mit einer den Aufnahmebereich 22 begrenzenden Stirnfläche 32 des Aufnahmebereichs 22 ab. Wesentlich ist, dass die Anordnung des Entkopplungsrings 30 derart ist, dass kein unmittelbarer, d.h. kein direkter Kontakt zwischen dem Membrantopf 15 und dem Gehäuse 12 stattfindet. Die axiale, in einer definierten Drehwinkelposition zur Längsachse 18 stattfindende Befestigung des Membrantopfs 15 an dem Gehäuse 12 erfolgt mittels eines Befestigungselements 35 in Form eines Rückhalterings 36.

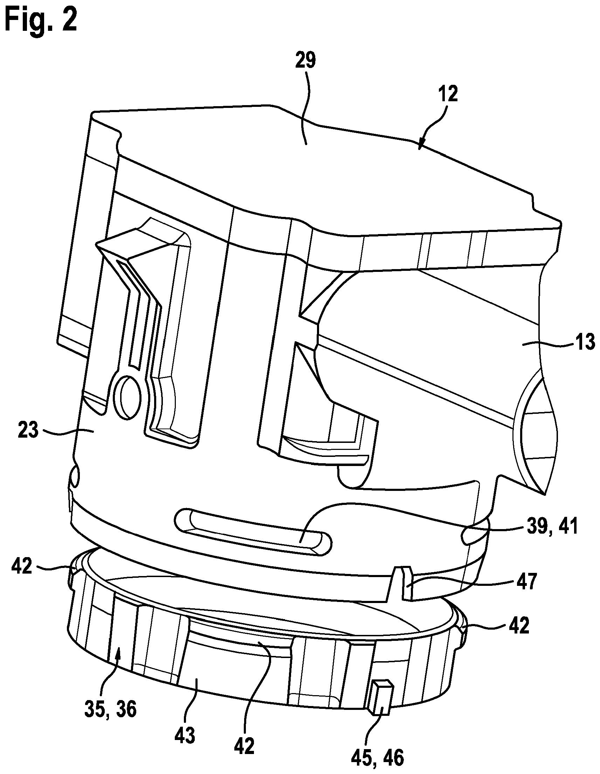

Das Befestigungselement 35 ist insbesondere in Form eines Kunststoffspritzgussteils ausgebildet und mit dem Gehäuse 12 des Ultraschallwandlers 10 mittels einer Rastverbindung 38 verbunden. Die Rastverbindung 38 umfasst im dargestellten Ausführungsbeispiel am Aufnahmebereich 22 des Gehäuses 12 mehrere, in Bezug zur Längsachse 18 radial umlaufende Rastöffnungen 39, die vorzugsweise in gleichgroßen Winkelabständen zueinander angeordnet sind. Die Rastöffnungen 39 sind im dargestellten Ausführungsbeispiel in Form von Durchgangsöffnungen 41 langlochförmig ausgebildet und weisen eine Haupterstreckungsrichtung auf, die senkrecht zur Längsachse 18 orientiert ausgerichtet ist. Die Rastöffnungen 39 wirken jeweils mit an dem Rückhaltering 36 ausgebildeten Rastelementen 42 zusammen, die lediglich in der Fig. 2 erkennbar sind. Die Rastelemente 42 sind über ein laschenartiges Verbindungselement 43 einstückig an dem Rückhaltering 36 angeformt und ragen in Bezug zur Längsachse 18 radial nach außen. Durch die Verbindungselemente 43 sind die Rastelemente 42 radial nach innen elastisch eindrückbar bzw. beweglich angeordnet. Insbesondere ist die Form der Rastelemente 42 der Form der Rastöffnungen 39 angepasst, d.h., dass sie in etwa rechteckförmig ausgebildet sind und eine Haupterstreckungsrichtung aufweisen, die senkrecht zur Längsachse 18 verläuft. Die Länge der Rastelemente 42 in Umfangsrichtung kann dabei etwas geringer sein als die entsprechende Länge der Rastöffnungen 39, sodass zwischen den Rastöffnungen 39 und den Rastelementen 42 ein (geringes) Drehwinkelspiel vorhanden sein kann.

Zur lagerichtigen Orientierung des Rückhalterings 36 am Aufnahmebereich 22 des Gehäuses 12 sind darüber hinaus Zentriermittel 45 vorgesehen. Die Zentriermittel 45 umfassen beispielhaft einen von der Außenwand des Rückhalterings 36 abstehenden Nocken 46, der in eine gegengleiche Aussparung 47 im Aufnahmebereich 22 eingreift.

Wie insbesondere anhand der Fig. 1 erkennbar ist, ist die leicht konisch ausgebildete Außenkontur 48 des Rückhalterings 36 derart an die Außenkontur 49 der Gehäusewand 23 angepasst, dass die Außenkontur 48 bündig in die Außenkontur 49 übergeht.

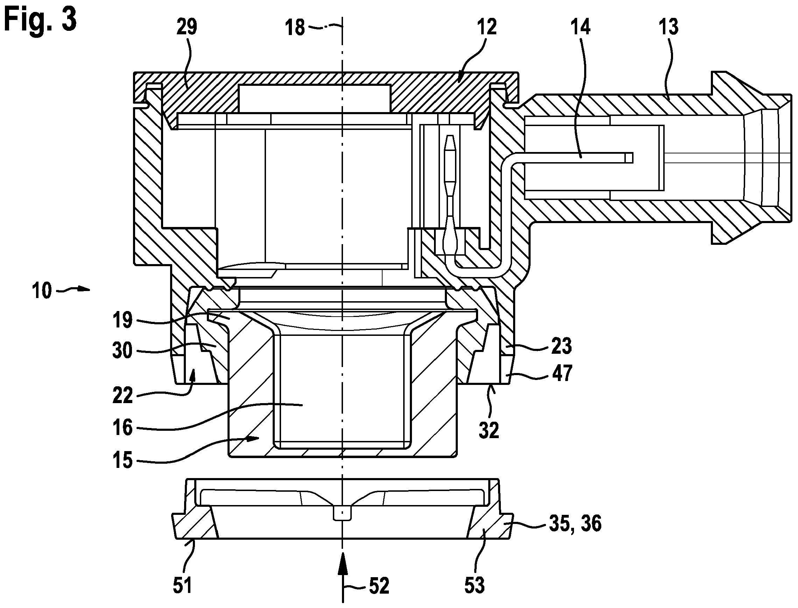

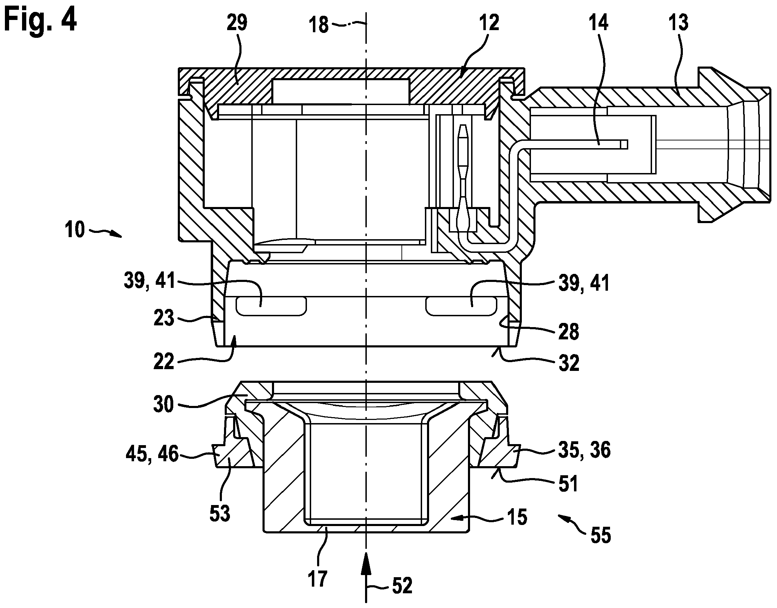

Der Rückhaltering 36 weist eine (untere) Stirnfläche 51 auf, die bei montiertem Rückhaltering 36 bündig mit der Stirnfläche 32 des Aufnahmebereichs 22 abschließt, wobei durch den Pfeil 52 die Montagerichtung des Rückhalterings 36 relativ zum Gehäuse 12 bezeichnet ist (Fig. 3, 4). Weiterhin ist der Rückhaltering 36 einen radial nach innen ragenden, umlaufenden Quetschabschnitt 53 auf, der zur Anlage des Entkopplungsrings 30 an der Außenwand des Membrantopfs 15 dient. Wie anhand der Fig. 1 erkennbar ist, ist darüber hinaus zwischen dem Entkopplungselement 30und der der Gehäusewand (23) ein Freiraum 54 zur Aufnahme des Entkopplungsrings 30 ausgebildet.

Die Montage des Membrantopfs 15, des Entkopplungsrings 30 sowie des Rückhalterings 36 an dem Gehäuse 12 kann entsprechend der Darstellung der Fig. 3 und 4 auf unterschiedliche Art und Weise erfolgen. In der Fig. 3 ist der Fall dargestellt, bei dem der Membrantopf 15 zusammen mit dem Entkopplungsring 30 bereits innerhalb des Aufnahmebereichs 22 des Gehäuses 12 angeordnet bzw. positioniert ist. In diesem Fall wird der Rückhaltering 36 anschließend aus der in der Fig. 3 dargestellten Position in Richtung des Pfeils 52 bewegt, um die Rastverbindung 38 entsprechend der Fig. 1 zwischen dem Rückhaltering 36 und dem Gehäuse 12 auszubilden.

In der Fig. 4 ist dagegen der Fall dargestellt, bei der der Membrantopf 15, zusammen mit dem Entkopplungsring 30 und dem Rückhaltering 36 vormontiert sind. Die so ausgebildete Baugruppe 55 wird anschließend in Richtung des Pfeils 52 in den Aufnahmebereich 22 des Gehäuses 12 eingeführt, wobei die Rastverbindung 38 ausgebildet wird.

Der soweit beschriebene Ultraschallwandler 10 bzw. das Befestigungselement 35 kann in vielfältiger Art und Weise abgewandelt bzw. modifiziert werden, solange nicht von der durch die Ansprüche definierten Erfindung abgewichen wird.

## Patentansprüche

1. Ultraschallwandler (10), mit einem Membrantopf (15), der mittels eines ringförmigen Befestigungselements (35), das den Membrantopf (15) in Bezug zu einer Längsachse (18) des Membrantopfs (15) mittelbar an dessen Außendurchmesser radial umfasst, mit einem Gehäuse (12) verbunden ist, wobei das Befestigungselement (35) zum form- und/oder kraftschlüssigen Verbinden mit dem Gehäuse (12) zumindest bereichsweise radial innerhalb eines Aufnahmebereichs (22) für das Befestigungselement (35) im Gehäuse (12) angeordnet ist, **dadurch gekennzeichnet, dass** an dem Befestigungselement (35) und dem Gehäuse (12) jeweils wenigstens ein Zentriermittel (45) ausgebildet ist, wobei die Zentriermittel (45) zusammenwirken und das Befestigungselement (35) zum Gehäuse (12) in einer definierten Drehwinkellage positioniert.

2. Ultraschallwandler nach Anspruch 1, **dadurch gekennzeichnet, dass** das Befestigungselement (35) am Gehäuse mittels einer Rastverbindung (38) befestigt ist, die wenigstens ein am Befestigungselement (35) radial nach außen ragendes Rastelement (42) aufweist, das mit einer zumindest näherungsweise gegengleichen Rastöffnung (39) zusammenwirkt, die im Aufnahmebereich (22) zumindest im Bereich einer Innenwand (28) des Aufnahmebereichs (22) ausgebildet ist.

3. Ultraschallwandler nach Anspruch 2, **dadurch gekennzeichnet, dass** die Rastöffnung (39) als Durchgangsöffnung (41) ausgebildet ist.

4. Ultraschallwandler nach Anspruch 2 oder 3, **dadurch gekennzeichnet, dass** das wenigstens eine Rastelement (42) als elastisch bewegliches Rastelement (42) ausgebildet ist.

5. Ultraschallwandler nach einem der Ansprüche 1 bis 4, **dadurch gekennzeichnet, dass** das Befestigungselement (35) einen radial nach innen ragenden Quetschabschnitt (53) aufweist, der mit einem zwischen dem Gehäuse (12) und dem Membrantopf (15) angeordneten, elastisch ausgebildeten Entkopplungsring (30) zusammenwirkt.

6. Ultraschallwandler nach einem der Ansprüche 2 bis 5, **dadurch gekennzeichnet, dass** das wenigstens eine Rastelement (42) und die mit dem wenigstens einen Rastelement (42) zusammenwirkende Rastöffnung (39) jeweils in etwa rechteckförmig ausgebildet sind, wobei die Haupterstreckungsrichtung senkrecht zur Längsachse (18) des Membrantopfs (15) verläuft.

7. Ultraschallwandler nach einem der Ansprüche 1 bis 6, **dadurch gekennzeichnet, dass** zwischen einem Entkopplungselement (30) und einer Gehäusewand (23) ein Freiraum (54) zur Aufnahme des Entkopplungsrings (30) ausgebildet ist.

8. Ultraschallwandler nach einem der Ansprüche 1 bis 7, **dadurch gekennzeichnet, dass** das Befestigungselement (35) als Kunststoffspritzgußteil ausgebildet ist.

## Claims

1. Ultrasonic transducer (10) comprising a diaphragm pot (15) which is connected to a housing (12) by means of a ring-shaped fastening element (35) which radially surrounds the diaphragm pot (15) indirectly at its outer diameter in relation to a longitudinal axis (18) of the diaphragm pot (15), wherein
the fastening element (35) for form-fitting and/or forcefitting connection to the housing (12) is at least partially arranged radially within a receiving region (22) for the fastening element (35) in the housing (12),
**characterized in that**
in each case at least one centring means (45) is formed on the fastening element (35) and the housing (12), wherein the centring means (45) cooperate and position the fastening element (35) relative to the housing (12) in a defined rotational angle position.

2. Ultrasonic transducer according to Claim 1, **characterized in that** the fastening element (35) is fastened to the housing by means of a latching connection (38) which comprises at least one latching element (42) that projects radially outwards on the fastening element (35) and that cooperates with an at least approximately mating latching opening (39) which is formed in the receiving region (22) at least in the region of an inner wall (28) of the receiving region (22).

3. Ultrasonic transducer according to Claim 2, **characterized in that** the latching opening (39) is in the form of a passage opening (41).

4. Ultrasonic transducer according to Claim 2 or 3, **characterized in that** the at least one latching element (42) is in the form of an elastically movable latching element (42).

5. Ultrasonic transducer according to one of Claims 1 to 4, **characterized in that** the fastening element (35) comprises a radially inwardly projecting squeezing portion (53) which cooperates with an elastic decoupling ring (30) arranged between the housing (12) and the diaphragm pot (15).

6. Ultrasonic transducer according to one of Claims 2 to 5, **characterized in that** the at least one latching element (42) and the latching opening (39) cooperating with the at least one latching element (42) are each of approximately rectangular form, wherein the main direction of extent runs perpendicularly with respect to the longitudinal axis (18) of the diaphragm pot (15).

7. Ultrasonic transducer according to one of Claims 1 to 6, **characterized in that** a free space (54) for receiving the decoupling ring (30) is formed between a decoupling element (30) and a housing wall (23).

8. Ultrasonic transducer according to one of Claims 1 to 7, **characterized in that** the fastening element (35) is in the form of an injection-moulded plastics part.

## Revendications

1. Transducteur à ultrasons (10) avec un pot à membrane (15) relié à un boîtier (12) au moyen d'un élément de fixation annulaire (35) qui entoure radialement le pot à membrane (15) par rapport à un axe longitudinal (18) du pot à membrane (15), indirectement au niveau de son diamètre extérieur,
l'élément de fixation (35) étant agencée radialement, au moins par zones, à l'intérieur d'une zone de réception (22) pour l'élément de fixation (35) dans le boîtier (12), en vue d'une liaison par complémentarité de forme et/ou par adhérence avec le boîtier (12),
**caractérisé en ce**
**qu'**au moins un moyen de centrage (45) est réalisé respectivement sur l'élément de fixation (35) et sur le boîtier (12), les moyens de centrage (45) coopérant et positionnant l'élément de fixation (35) par rapport au boîtier (12) dans une position angulaire de rotation définie.

2. Transducteur à ultrasons selon la revendication 1, **caractérisé en ce que** l'élément de fixation (35) est fixé au boîtier au moyen d'une liaison par encliquetage (38) qui présente au moins un élément d'encliquetage (42) dépassant radialement vers l'extérieur sur l'élément de fixation (35), qui coopère avec une ouverture d'encliquetage (39) au moins approximativement inversement symétrique, qui est réalisée dans la zone de réception (22) au moins dans la zone d'une paroi intérieure (28) de la zone de réception (22).

3. Transducteur à ultrasons selon la revendication 2, **caractérisé en ce que** l'ouverture d'encliquetage (39) est réalisée sous forme d'ouverture de passage (41).

4. Transducteur à ultrasons selon la revendication 2 ou 3, **caractérisé en ce que** l'au moins un élément d'encliquetage (42) est réalisé sous forme d'élément d'encliquetage (42) mobile élastiquement.

5. Transducteur à ultrasons selon l'une quelconque des revendications 1 à 4, **caractérisé en ce que** l'élément de fixation (35) présente une section de pincement (53) faisant saillie radialement vers l'intérieur, qui coopère avec une bague de découplage (30) réalisée sous forme élastique, agencée entre le boîtier (12) et le pot à membrane (15).

6. Transducteur à ultrasons selon l'une quelconque des revendications 2 à 5, **caractérisé en ce que** l'au moins un élément d'encliquetage (42) et l'ouverture d'encliquetage (39) coopérant avec l'au moins un élément d'encliquetage (42) sont respectivement réalisés sous forme approximativement rectangulaire, la direction d'extension principale s'étendant perpendiculairement à l'axe longitudinal (18) du pot à membrane (15).

7. Transducteur à ultrasons selon l'une quelconque des revendications 1 à 6, **caractérisé en ce qu'**un espace libre (54) est réalisé entre un élément de découplage (30) et une paroi de boîtier (23) pour recevoir la bague de découplage (30).

8. Transducteur à ultrasons selon l'une quelconque des revendications 1 à 7, **caractérisé en ce que** l'élément de fixation (35) est réalisé sous forme de pièce en matière plastique moulée par injection.
